# EUROPÄISCHE PATENTANMELDUNG

(11) **EP 1 610 350 A2**
(43) Veröffentlichungstag der Anmeldung: **28.12.2005**
(21) Anmeldenummer: 05013674.6
(22) Anmeldetag: 24.06.2005
(51) Int. Cl.: H01F 27/28, H01F 30/16, H01F 27/40

(54) **Schweissstromwandler**

(30) Priorität: 25.06.2004 DE 102004030845
(71) Anmelder: Harms + Wende GmbH & Co. KG, 21079 Hamburg (DE)
(72) Erfinder: Schumann, Fritz-Joachim, 21244 Buchholz (DE); Webb, Alexander, 21077 Hamburg (DE); Löser, Ralf Ernst, Dr., 23558 Lübeck (DE)
(74) Vertreter: Glawe, Delfs, Moll

(57) **Zusammenfassung**

Der Schweißstromwandler mit einem Kern (2), auf dem Primär-und Sekundärwicklungen (3, 4) angeordnet sind, und mit Dioden (6), die mit Endbereichen der Sekundärwicklungen (4) verbunden sind, zeichnet sich dadurch aus dass die Mittelabgriffe der Sekundärwicklungen (4) an einem oder mehreren elektrisch leitenden Baukörpern angebracht sind und mit denselben leitend verbunden sind, die von den Sekundärwicklungen (4) weggerichteten Endflächen der Dioden an einem oder mehreren elektrisch leitenden Bauelementen (17) angebracht sind und mit diesen elektrisch verbunden sind, das (die) Bauelement(e) (17) an einem Ende mit einem elektrischen Anschluss verbunden ist (sind), und der (die) Baukörper am gegenüberliegenden Ende mit einem elektrischen Anschluss verbunden ist (sind).

## Beschreibung

Die Erfindung betrifft einen Schweißstromwandler mit einem Kern, auf dem Primär- und Sekundärwicklungen angeordnet sind, und mit Dioden, die mit Endbereichen der Sekundärwicklungen verbunden sind, wobei die Sekundärwicklungen Mittelabgriffe aufweisen.

Beim Elektroschweißen, insbesondere beim elektrischen Punktschweißen wird mit verhältnismäßig niedrigen Spannungen und hohen Strömen gearbeitet. Zu diesem Zweck wird die Netzspannung von z. B. 230 oder 400 V in einem Transformator auf die niedrigere Schweißspannung von einigen Volt heruntertransformiert, wobei dann entsprechend hohe Stromstärken zur Verfügung stehen. Transformatoren, mit denen die erforderlichen hohen Stromstärken erreicht werden können und die bei der Netzfrequenz von 50 Hz oder 60 Hz arbeiten, sind sehr groß und schwer. Man ist daher dazu übergegangen, den Schweißstromtransformator mit höheren Frequenzen zu betreiben. Zu diesem Zweck wird zunächst in einem Inverter die Wechselspannung von 50 Hz oder 60 Hz gleichgerichtet und in eine Wechselspannung höherer Frequenz von einigen kHz, insbesondere 10 kHz umgewandelt. Der entsprechende Transformator kann dann wesentlich kleiner aufgebaut sein.

Man ist dabei bestrebt, diesen Transformator besonders klein zu halten, da er dann nicht nur weniger Platz benötigt, sondern auch Verluste vermieden werden, die insbesondere bei der verhältnismäßig hohen Frequenz von 10 kHz bei längeren Leitungen auftreten würden. Ein solcher Schweißstromtransformator wird dann zusammen mit Dioden verwendet, in denen der Schweißstrom gleichgerichtet wird, um dann zum Schweißen verwendet zu werden.

Bei einem bekannten Schweißstromwandler der Eingangs genannten Art (US 2003/0151484 A1) sind abwechselnd Primär- und Sekundärwicklungen auf einem geschlossenen Kern angeordnet. Die für die Gleichrichtung erforderlichen Dioden sind mit Endbereichen der Sekundärwicklungen verbunden, nämlich direkt auf Endbereiche dieser Sekundärwicklungen aufgebracht, wodurch hier Leitungen vermieden werden. Die Sekundärwicklungen erstrecken sich dabei jeweils ungefähr 1,5 mal um den Kern, so dass die Enden der Sekundärwicklungen für Verbindung mit den Dioden auf derselben Seite des Kerns angeordnet sind. In der Entgegenhaltung wird zwar behauptet, dass es möglich ist, den Wandler für eine Arbeitsfrequenz von 5 kHz und eine Dauerleistung von 250 kW so klein zu machen, dass er in einen Schuhkarton passt. Wie dies aber im einzelnen ausgeführt ist, ist der Entgegenhaltung nicht zu entnehmen. Insbesondere ist nicht beschrieben, wie die Dioden miteinander verbunden sind. Eine infolge schlechter Gestaltung der Stromwege resultierende unterschiedliche Belastung der Dioden führt zur Zerstörung der jeweils am höchsten belasteten Diode, es ergibt sich ein Domino-Effekt.

Die Aufgabe der Erfindung besteht in der Schaffung eines Schweißstromwandlers der Eingangs genannten Art, der einen besonders geringen Platzbedarf hat und bei dem die Stromwege für alle Dioden im wesentlichen gleich lang sind. Dies letztere Merkmal bedeutet für beide Stromrichtungen gleiche (komplexe) Stromvektoren. Diese sind Voraussetzung dafür, dass der Eisenkern nicht in den Sättigungszustand gerät und dass es bei einer symmetrischen Ummagnetisierung bleibt.

Außerdem wird dadurch vermieden, dass unterschiedliche Dioden unterschiedlich stark belastet werden, so dass die jeweils schwächsten Dioden und dadurch dann nacheinander alle Dioden zerstört werden.

Eine erfindungsgemäße Lösung besteht bei einem Schweißstromwandler, der einen Kern mit einen geraden Abschnitt, auf dem die Primär- und Sekundärwicklungen angebracht sind, und dioden aufweist, die mit den Endbereichen der Sekundärwicklungen elektrisch verbunden sind, darin,
- dass die Endbereiche und Mittelabgriffe benachbarter Sekundärwicklungen unterschiedlich ausgerichtet sind,
- dass die Mittelabgriffe der Sekundärwicklungen an sich parallel zum geraden Abschnitt des Kerns erstreckenden als Stangen ausgebildeten länglichen Baukörpern angebracht sind und mit denselben leitend verbunden sind,
- die von den Sekundärwicklungen weggerichteten Endflächen der Dioden an als elektrisch leitenden Platten ausgebildeten Bauelementen angebracht sind, die sich parallel zum geraden Abschnitt des Kerns erstrecken und mit Leitungen für das Kühlmittel versehen sind,
- wobei die Platten an einem in Längsrichtung des geraden Abschnitts des Kerns angeordneten Ende mit einem elektrischen Anschluss verbunden sind, und
- die Stange an dem anderen in Längsrichtung des geraden Abschnitts des Kerns angeordneten Ende mit einem elektrischen Anschluss verbunden ist.

Da die Endbereiche und Mittelabgriffe benachbarter Sekundärwicklungen unterschiedlich ausgerichtet sind, sind die Dioden zweier benachbarter Sekundärwicklungen nicht benachbart, sondern stehen auf Lücke. Der erforderliche Abstand der Sekundärwicklungen, der durch die Abmessungen der Diode bestimmt wird, wird auf diese Weise verringert. Die Platten sind (gesehen in Längsrichtung des geraden Abschnitts des Kerns) an einem Ende mit einem Anschluss verbunden, während die Stangen am gegenüberliegenden Ende elektrisch verbunden sind. Auf diese Weise werden für alle Sekundärwicklungen gleiche Stromwege erreicht. Obwohl jeweils eine größere Anzahl von Platten und Stangen vorgesehen sein könnte, hat es sich als besonders zweckmäßig erwiesen, zwei Platten und zwei Stangen vorzusehen. Dadurch erhält man eine besonders kompakte Bauweise.

Die beiden Platten und die beiden Stangen sind dabei um den geraden Abschnitt des Kerns herum zueinander um 60° bis 180° winkelversetzt. In Richtung des geraden Abschnitts des Kerns gesehen weist die Orientierung der Dioden und Mittelabgriffe damit von einer Sekundärwindung zur anderen einen Winkelunterschied von 60° bis 180° auf.

Insbesondere kann dieser Winkel 180° betragen, so dass die beiden Platten auf gegenüberliegenden Seiten des Abschnitts des Kerns angeordnet sind, und auch die beiden Stangen auf gegenüberliegenden Seiten des Abschnitts des Kerns angeordnet sind.

Die Mittelabgriffe der Sekundärwicklungen sind also bei dieser Ausführungsform an sich parallel zum geraden Abschnitt des Kerns erstreckenden elektrisch leitenden länglichen Stangen angebracht, von denen je eine auf beiden Seiten des Kerns angeordnet ist und mit denselben leitend verbunden sind. Auf jeweils derselben Seite des Kerns sind dann die Dioden mit den Endbereichen der Sekundärwicklungen verbunden. Die von den Sekundärwicklungen weggerichteten Endflächen der Dioden sind an elektrisch leitenden Platten angebracht, die sich parallel zum geraden Abschnitt des Kerns erstrecken und mit Leitungen für das Kühlmittel versehen sind. Entsprechende Platten sind auf beiden Seiten des Kerns für die dort angeordneten Dioden und Endbereiche der Sekundärwicklungen vorgesehen. Es werden also einerseits die Sekundärwicklungen und andererseits indirekt die Dioden über die gekühlten Platten gekühlt. Auch die Stangen können gekühlt werden. Durch diese Merkmale wird ein sehr kompakter Aufbau des Schweißstromwandlers erreicht.

Weiter sind bei dieser Ausführungsform die beiden Platten an einem in Längsrichtung des geraden Abschnitts des Kerns angeordneten Ende mit einem Anschluss versehen und die beiden länglichen Baukörper an dem anderen in Längsrichtung des geraden Abschnitts des Kerns angeordneten Ende mit einem elektrischen Anschluss versehen. Auf diese Weise ist der Stromweg für alle Sekundärwicklungen bzw. Dioden im wesentlichen gleich lang. Wenn der Strom nur einen kurzen Weg über den länglichen Baukörper zurücklegen muss, um in die Sekundärwindung zu gelangen, so muss er von der Diode zum anderen Anschluss einen längeren Weg zurücklegen und umgekehrt. Es wird also eine sehr große Gleichförmigkeit für alle Sekundärwicklungen und Dioden erreicht. Dies bedeutet für beide Stromrichtungen gleiche (komplexe) Stromvektoren. Diese sind Voraussetzung dafür, dass der Eisenkern nicht in den Sättigungszustand gerät und dass es bei einer symmetrischen Ummagnetisierung bleibt. Außerdem wird vermieden, dass die jeweils schwächsten Dioden und dann anschließend alle anderen Dioden überlastet und zerstört werden.

Eine weitere erfindungsgemäße Lösung besteht bei einem Schweißstromwandler, der einen Kern mit einen geraden Abschnitt aufweist, auf dem die Primär- und Sekundärwicklungen angebracht sind, darin,
- dass die Endbereiche und Mittelabgriffe benachbarter Sekundärwicklungen gleich ausgerichtet sind,
- dass die einen Endbereiche der parallel angeordneten Sekundärwicklungen mit ersten elektrisch leitenden Plattenelementen und und die anderen Endbereiche der Sekundärwicklungen mit zweiten elektrisch leitenden Plattenelementen verbunden sind, die zu den ersten leitenden Plattenelementen parallel angeordnet sind,
- dass die Mittelabgriffe der Sekundärwicklungen an einem sich parallel zum geraden Abschnitt des Kerns erstreckenden als Stange ausgebildeten länglichen Baukörper angebracht sind und mit denselben leitend verbunden sind,
- die von den ersten und zweiten leitenden Plattenelementen abgewandten Endflächen der Dioden an einem als elektrisch leitende Platte ausgebildeten Bauelement auf beiden Seiten desselben sich paarweise gegenüberstehend angebracht sind, das parallel zu den ersten und zweiten Plattenelementen zwischen denselben angeordnet ist und mit Leitungen für das Kühlmittel versehen ist,
- wobei die Platte an einem in Längsrichtung des geraden Abschnitts des Kerns angeordneten Ende mit einem elektrischen Anschluss verbunden ist und einen Schlitz aufweist, durch den direkter Stromfluss von den Dioden an diesem End zum Anschluss verhindert wird, und
- die Stange an dem selben in Längsrichtung des geraden Abschnitts des Kerns angeordneten Ende mit einem elektrischen Anschluss verbunden ist.

Diese Ausführungsform unterscheidet sich von der ersten dadurch hier, dass alle Sekundärspulen gleich ausgerichtet sind. Die Geometrie würde es an sich mit sich bringen, dass die Dioden an einem Ende der Platte in einem längeren Stromweg angeordnet sind als die Dioden am anderen Ende der Platte. Dies wird durch den Schlitz ausgeglichen, so dass man auch bei dieser Ausführungsform für alle Dioden ungefährden den gleichen Strom hat.

Obwohl ein z.B. stabförmiger Kern verwendet werden könnte, ist bei einer vorteilhaften Ausführungsform der Kern geschlossen. Eine besonders zweckmäßige Ausführungsform zeichnet sich dadurch aus, dass die Sekundärwicklungen sich jeweils ungefähr 1,5 mal um den Kern herum erstrecken.

Insbesondere können die Sekundärwicklungen als metallische Röhren ausgebildet sein, durch die ein Kühlmittel leitbar ist und deren Querschnittsdurchmesser senkrecht zur Wicklungsebene wenigstens teilweise, bevorzugt im Bereich der Überkreuzung kleiner ist als in der Wicklungsebene. Dadurch haben die Sekundärwicklungen in der Erstreckungsrichtung des Kerns eine kleine Bauhöhe, so dass eine größere Anzahl von Sekundärwicklungen auf dem Kern angeordnet werden kann.

Trotzdem können die Sekundärwicklungen im Gegensatz zum Stand der Technik, wo die Sekundärwicklungen plattenförmig ausgebildet sind, wobei unklar bleibt, wie diese gekühlt werden sollen, sehr gut gekühlt werden. Es sind allerdings in herkömmlichen Schweißtrafos Rechteck-Hohlprofil-Sekundärwindungen, die von Kühlflüssigkeit durchströmt werden, bekannt.

Die im wesentlichen flachen Sekundärwicklungen können auf besonders einfache Weise hergestellt werden, wenn sie zumindest im Bereich der Überkreuzung flachgedrückte kreiszylindrische Röhren sind.

Bei einer anderen vorteilhaften Ausführungsform ist vorgesehen, dass der Kern ein Ringkern ist und die Mittelabgriffe mit einem ringförmigen Baukörper und die von den Sekundärwicklungen weggerichteten Enden der Dioden mit einem äußeren ringförmigen Bauelement verbunden sind. In diesem Falle weist der Kern natürlich keinen geraden Abschnitt auf. Die übrigen erfindungsgemäßen Merkmale sind aber im wesentlichen die gleichen.

Bei einer anderen vorteilhaften Ausführungsform ist vorgesehen, dass der Kern ein Ringkern ist und die Mittelabgriffe mit einem auf einer Seite des Kerns, vorzugsweise koaxial mit demselben angeordneten ringförmigen Baukörper und die von den Sekundärwicklungen weggerichteten Enden der Dioden mit einem ebenfalls ringförmigen vorzugsweise mit dem Kern koaxialen Bauelement auf der selben Seite des Kerns verbunden sind. Auch in diesem Falle kann der Kern natürlich keinen geraden Abschnitt aufweisen.

Die ringförmigen Kerne, ringförmigen Baukörper und ringförmigen Bauelemente sind bei diesen Ausführungsformen koaxial. Wenn hier von "ringförmig" die Rede ist, so bedeutet dies keinesfalls nur kreisringförmig, sondern eine geschlossene Bauform dieser Teile. Statt eines Kreisrings könnte dieser "Ring" auch oval sein oder aber aus zwei parallelen geraden Abschnitten bestehen, die an ihren Enden durch halbkreisförmige Teile verbunden sind.

Der Vorteil der Ausführungsform, wo Bauelement und Bauteil außerhalb des ringförmigen Kerns vorgesehen sind, besteht darin, dass hier die Dioden einen größeren Abstand voneinander haben als die Mittelabgriffe benachbarter Sekundärwicklungen. Dieser Vorteil ist natürlich nicht gegeben, wenn die Dioden oberhalb (oder unterhalb) der Ebene des Ringkerns angeordnet sind, also eine gegenüber der vorgenannten Ausführungsform 90° unterschiedliche Orientierung haben. In diesem Falle wird zweckmäßigerweise vorgesehen, dass die Dioden benachbarter Sekundärwindungen abwechselnd auf einer Seite und der anderen Seite der Ebene des ringförmigen Kerns angeordnet sind. In diesem Falle sind natürlich ähnlich wie bei der oben ausführlich diskutierten Ausführungsform des Schweißstromwandlers mit einem geraden Kernabschnitt zwei Bauelemente und zwei Baukörper vorgesehen.

Wenn die Primärwicklungen eine Mehrzahl an die Querschnittsform des Kerns angepasste Blechabschnitte aufweisen, die jeweils um 90° abgewinkelt schraubenartig angeordnet sind, so nehmen die Primärwicklungen wenig Raum in Längsrichtung des Kerns ein. Es versteht sich, dass die übereinanderliegenden Blechabschnitte elektrisch gegeneinander isoliert sein müssen. Auf diese Weise kann jede Primärwicklung mehrere Windungen erhalten, ohne dass es wie bei einer normalen Wicklung erforderlich ist, eine platzbeanspruchende Leitung vom Inneren der Spule nach außen zu führen.

Das gleiche kann erreicht werden, wenn bei einer vorteilhaften Ausführungsform die Primärwicklungen als flache im wesentlichen an die Querschnittsform des Kerns angepasste mehrlagige Einheiten ausgebildet sind, wobei in der ersten Lage die Windungen von außen nach innen gewunden sind, anschließend ein Übergang in eine andere Lage stattfindet und dort die Windungen dann von innen nach außen verlaufen. Insbesondere können zwei solcher Lagen vorgesehen sein.

Schon durch diese Merkmale sowohl der einen als auch der anderen dieser beiden Ausführungsformen allein wird die erfindungsgemäße Aufgabe gelöst. Dabei wird man verstehen, dass es natürlich nicht Aufgabe für die Erfindung der Primärwicklungen sein kann, einen Schweißstromwandler zu schaffen. Aufgabe ist es hier vielmehr, Primärwicklungen zu schaffen, die einen besonders geringen Platzbedarf für einen Schweißstromwandler ermöglichen.

Bei einer anderen vorteilhaften Ausführungsform sind die Primärwicklungen schraubenförmige Blechstreifen (auch Scheibenwicklung genannt) oder bestehen aus Draht mit rechteckigem Querschnitt.

Zweckmäßigerweise sind die Primärwicklungen in Reihe geschaltet. Dies kann auf besonders einfache Weise mit kurzen Verbindungen erreicht werden, wenn die Anschlüsse der Primärwicklungen senkrecht zur Ebene der Wicklungen gesehen übereinander angeordnet sind. Es kann dann jeweils der eine Anschluss der Primärwicklung mit dem anderen der nächsten Primärwicklung direkt verbunden werden.

Aufgrund der besonderen erfindungsgemäßen Merkmale und kompakten Bauart des Schweißstromwandlers der Erfindung ist es möglich, dass alle Komponenten einschließlich der Invertereinheit in einem gemeinsamen Gehäuse untergebracht sind.

Zweckmäßiger Weise sind die Komponenten vergossen und von einem Gehäuse umgeben, da man auf diese Weise eine besonders stabile Einheit erhält, in der die Komponenten gut geschützt sind.

Dabei ist der Schweißstromwandler zweckmäßigerweise mit elektrischen und Kühlmittelleitungs-Anschlüssen zum Anbringen einer Invertereinheit versehen, in der der Netzstrom von z. B. 50 Hz odr 60 Hz wie erwähnt zunächst gleichgerichtet und dann in eine Frequenz von z. B. 10 kHz umgewandelt wird.

Die Verbindung kann dabei permanent erfolgen, oder aber es kann die Möglichkeit vorgesehen werden, dass die Invertereinheit vom Schweißstromwandler getrennt werden kann. Entsprechend nachgiebige bzw. lösbare elektrische oder Kühlmittelleitungsanschlüsse sind nicht nur für den Fall zweckmäßig, dass die Invertereinheit wieder vom Schweißstromwandler gelöst werden kann, sondern auch im Falle dauernder Verbindung, da hier mögliche Schwingungen
oder Wärmeausdehnungen vermindert oder ausgeglichen werden können.

Die Erfindung wird im folgenden anhand von vorteilhaften Ausführungsformen unter Bezugnahme auf die beigefügten Zeichnungen beispielsweise beschrieben. Es zeigen:
- Fig. 1: den prinzipiellen Aufbau eines Schweißstromwandlers;
- Fig. 2: eine Gesamtansicht einer ersten Ausführungsform des Schweißstromwandlers der Erfindung mit entferntem Gehäuse;
- Fig. 3: ein Längsschnitt durch den Stromwandler der Figur 2;
- Fig. 4: eine perspektivische Darstellung einer Ausführungsform einer Primärwicklung;
- Fig. 5: die Reihenanordnung der Primärwicklungen;
- Fig. 6: eine andere Ausführungsform der Primärwicklung in Form einer eckigen Scheibenwicklung;
- Fig. 7: eine Ausführungsform einer Sekundärwicklung;
- Fig. 8: der prinzipielle Aufbau einer anderen Ausführungsform von Sekundärwicklung;
- Fig. 9: eine Sekundärwicklungsreihe mit Sekundärwicklungen von Figur 7;
- Fig. 10: teilweise weggeschnitten die Anordnung von Wicklungen, Dioden und elektrischen Verbindungen;
- Fig. 11: den prinzipiellen Aufbau einer zweiten Ausführungsform;
- Fig. 12: in perspektivischer Darstellung eine dritte Ausführungsform des Schweißstromwandlers der Erfindung;
- Fig. 13: in ähnlicher Darstellung wie in Fig. 12 einen Schnitt durch die dritte Ausführungsform der Erfindung;
- Fig. 14: das stangenförmige Element der dritten Ausführungsform, mit dem die Mittelabgriffe der Sekundärwicklungen leitend verbunden sind;
- Fig. 15: das plattenförmige Bauelement der dritten Ausführungsform, mit dem die Dioden elektrisch leitend verbunden sind
- Fig. 16: eine Sekundärwicklung der dritten Ausführungsform der Erfindung; und
- Fig. 17: eine Seitenansicht des plattenförmigen Bauelements der Fig. 15.

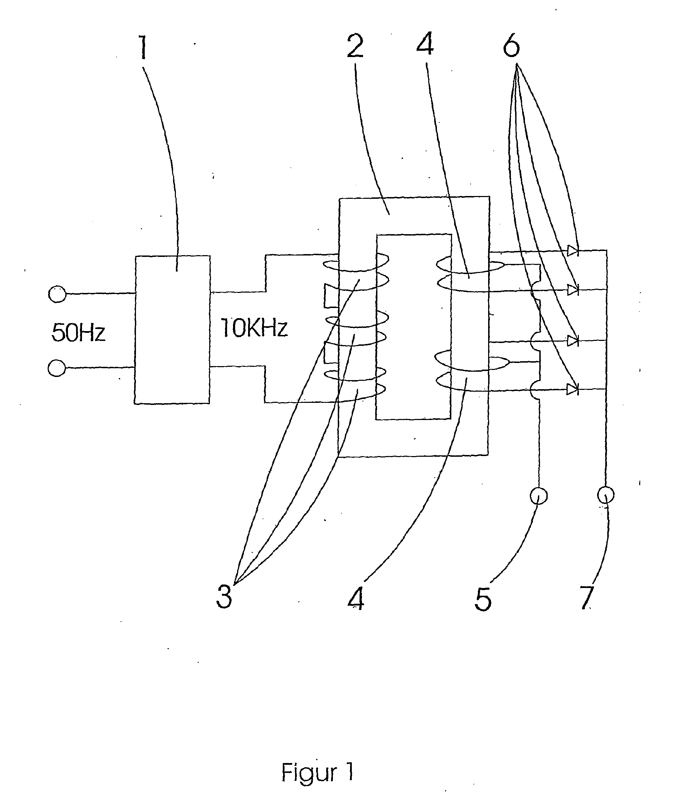

In Figur 1 ist der prinzipielle Aufbau eines Schweißstromwandlers dargestellt. Ein Inverter 1 wird mit einer Wechselspannung von 230 oder 400 V und einer Frequenz von 50 Hz gespeist. In dem Inverter 1 wird dieser Wechselstrom gleichgerichtet und in einen Wechselstrom mit höherer Frequenz, hier 10 kHz umgewandelt. Solche Inverter sind an sich bekannt, so dass auf eine Beschreibung desselben verzichtet werden kann.

Der Transformator, mit dem die Spannung heruntertransformiert wird, weist einen Kern 2 auf, auf dem Primärwicklungen 3 aufgesetzt sind. Andererseits sind auf dem Kern 2 Sekundärwicklungen 4 angeordnet, deren Mittelabgriffe miteinander verbunden sind und zu einem Ausgang 5 geführt sind. Die Endbereiche der Sekundärwicklungen 4 sind mit Dioden 6 verbunden, deren andere Elektroden miteinander verbunden und mit einem Anschluss 7 verbunden sind. An den Anschlüssen 5 und 7 wird die Schweißspannung abgenommen.

Figur 1 zeigt lediglich den prinzipiellen Aufbau. Bei dem erfindungsgemäßen Schweißstromwandler sind Primärspulen 3 und Sekundärspulen 4 auf derselben Seite des Kerns 2 miteinander verschachtelt angeordnet.

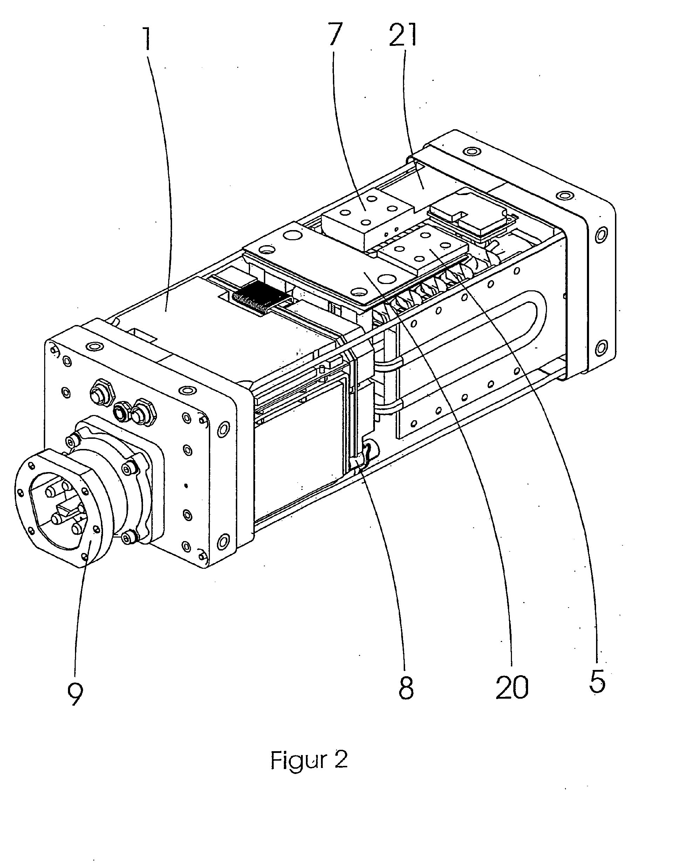

In Figur 2 ist eine Gesamtansicht einer ersten Ausführungsform des erfindungsgemäßen Schweißstromwandlers dargestellt, bei dem lediglich das Gehäuse weggelassen worden ist. Dabei ist der Transformatorteil mit den Dioden mit dem Inverter 1 zusammengebaut und durch Anschlüsse 8 (hier für die Kühlflüssigkeit gezeigt) verbunden. Links in Figur 2 weist der Inverter 1 Anschlüsse 9 für Strom auf. Der Schweißstrom wird an den Anschlüssen 5 und 7 abgenommen.

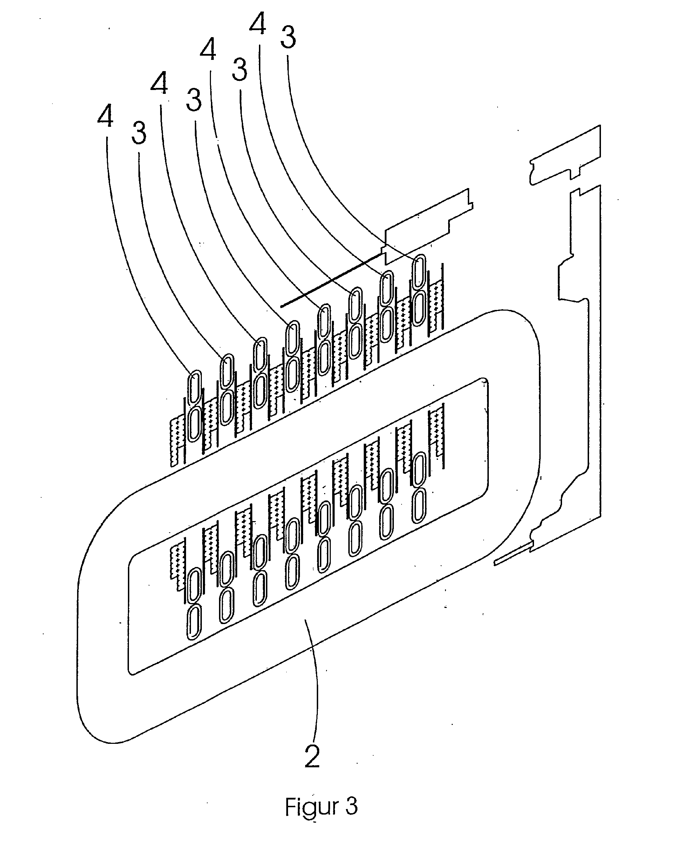

Figur 3 zeigt einen Längsschnitt durch den Transformatorteil des in Figur 2 gezeigten Schweißstromwandlers. Man erkennt hier den Kern 2 des Transformators, auf den die Primärwicklungen 3 abwechselnd mit den Sekundärwicklungen 4 auf einem Zweig des Kerns 2 angeordnet sind.

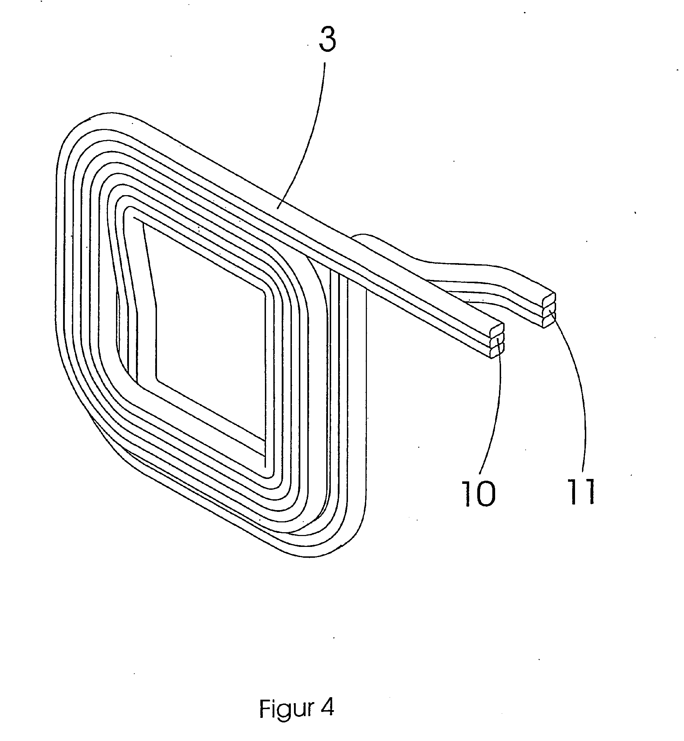

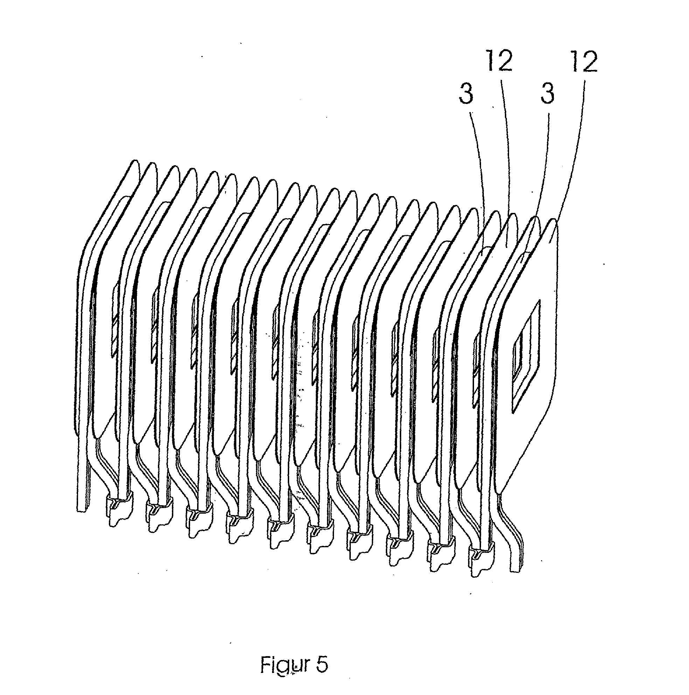

In Figur 4 ist eine Primärwicklung 3 gezeigt. Man erkennt, dass der Leiter zunächst in einer Ebene von außen nach innen gewickelt ist, dann im Zentrum in die in der Figur 4 dahinterliegende Ebene ausweicht, wo dann die Wicklung von innen nach außen weitergeführt wird. Auf diese Weise wird ein Draht vermieden, der vom Inneren der Wicklung nach außen führt und dadurch die Dicke der Primärwicklung vergrößert. Diese Dickenvergrößerung würde zu einer Vergrößerung des Transformators führen, die natürlich unerwünscht ist. Die Bauart der in Figur 4 gezeigten Primärspule ermöglicht es auch, dass die beiden Anschlüsse 10 und 11 der Primärwicklung 3 in Richtung senkrecht zur Ebene der Primärwicklung gesehen übereinander angeordnet sind, wobei der Anschluss 11 abgewinkelt ist. Dies ermöglicht es, dass die Primärwicklungen zu einer Reihe hintereinander geschalteter Primärwicklungen elektrisch verbunden werden können, wie dies in Figur 5 gezeigt ist. Dabei sind auf beiden Seiten der Primärwicklungen 3 jeweils noch Zwischenplatten 12 angeordnet. Jeweils zwischen zwei Primärwicklungen 3 wird, wie dies weiter unten beschrieben wird, eine Sekundärwicklung 4 angeordnet.

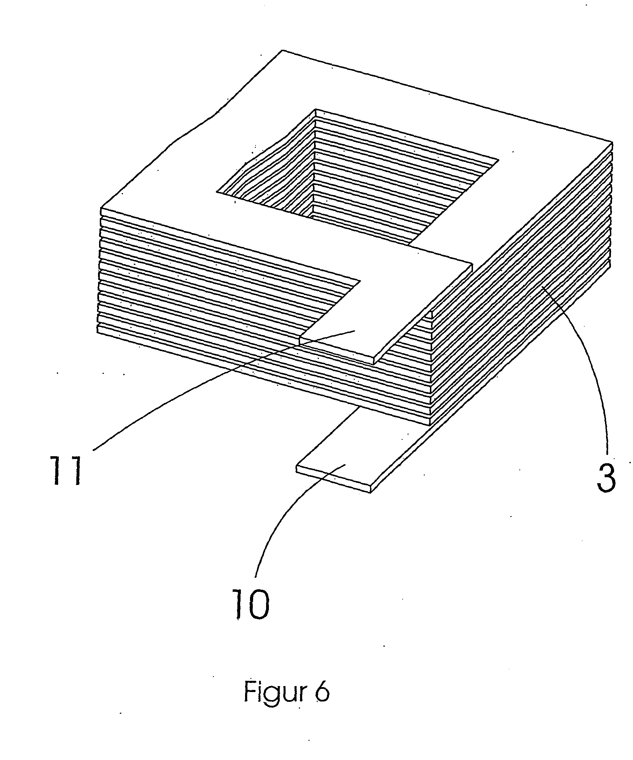

Figur 6 zeigt eine alternative Ausführungsform der Primärwicklung 1, die aus flachen Blechstreifen zusammengebaut ist, die spiralförmig um den Kern 1 herumgeführt werden. Auch hier sind beide Anschlüsse 10, 11 übereinander angeordnet, so dass eine ähnliche Reihenanordnung wie bei der Ausführungsform von Figur 5 möglich ist.

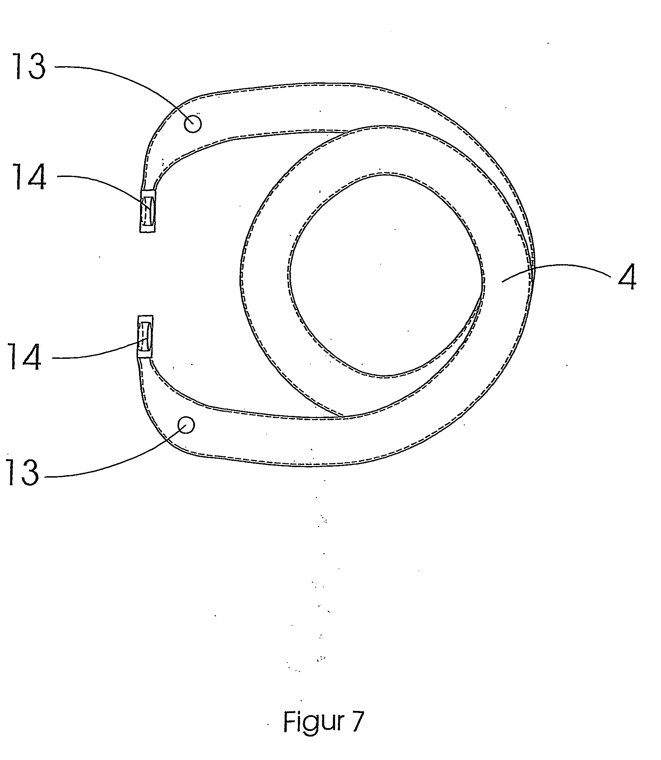

In Figur 7 ist eine Sekundärwicklung 4 dargestellt, die aus einem flachgedrückten Rohr besteht, in das durch Anschlüsse 13 Kühlflüssigkeit eingeleitet bzw. abgeführt werden kann. Die Endbereiche 14 sind flach und mit einem Befestigungsloch ausgebildet, damit sie hier mit Dioden elektrisch und mechanisch verbunden werden können.

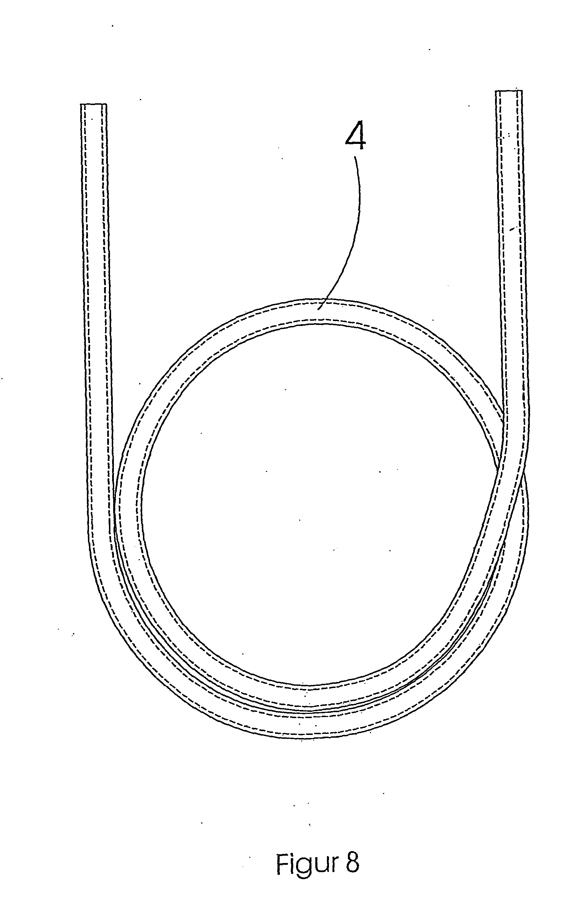

In Figur 8 ist der prinzipielle Aufbau einer alternativen Ausführungsform gezeigt, bei der an der Stelle, wo beide Ausführungsformen der Figur 7 zwei Windungen übereinander liegen, diese nebeneinander angeordnet sind, wobei der Kreuzungspunkt an einer anderen Stelle (in Figur 8 unten) angeordnet ist. Der Vorteil dieser Anordnung liegt im gleich bleibenden Querschnitt des Leiters - das Flachdrücken ist nicht erforderlich.

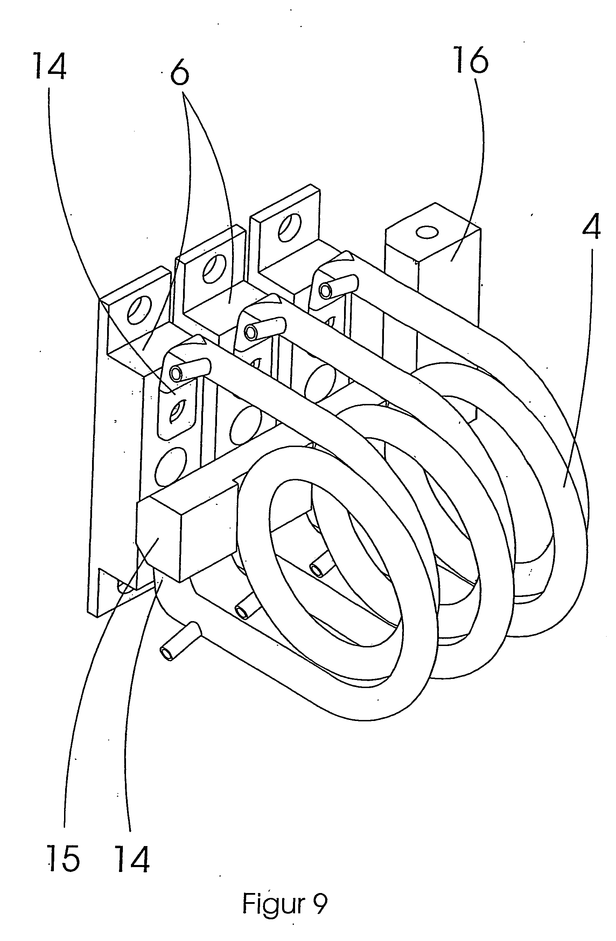

In Figur 9 ist eine Reihe von Sekundärwicklungen 4 gezeigt, die an ihren Enden 14 jeweils mit einer Diode 6 verbunden sind. Die Mittelabgriffe der Sekundärwicklungen 4 sind mit einer Stange 15 mechanisch und elektrisch verbunden, die ein abgewinkeltes Ende 16 trägt, mit dem die Verbindung nach außen erfolgt. Die Anordnung der Figur 9 wird auf den Kern aufgesetzt, wobei eine zweite Anordnung von Sekundärwicklungen 2 verschachtelt mit der in Figur 9 gezeigten angeordnet wird, wobei dann allerdings die Dioden 6 zur anderen Seite, d. h. in Figur 9 nach vorne rechts angeordnet sind. Jeweils zwischen zwei solche Sekundärwicklungen 4 wird eine Primärwicklung 3 angeordnet. Bei der in Figur 9 dargestellten Ausführungsform sind die Dioden 6 parallel angeordnet, aber nicht miteinander verbunden. Die einzelnen Dioden 6 mit den dazugehörigen Sekundärwicklungen 4 arbeiten also unabhängig voneinander. Sie können aber auch elektrisch parallel geschaltet werden, indem die Anschlüsse 14 in Figur 9 oben und unten durch leitende Metallstangen verbunden sind, durch die dann auch das Kühlfluid für die Sekundärwicklungen 4 geleitet werden kann, so dass sie in Figur 9 gezeigten Kühlfluidanschlüsse nicht mehr erforderlich sind.

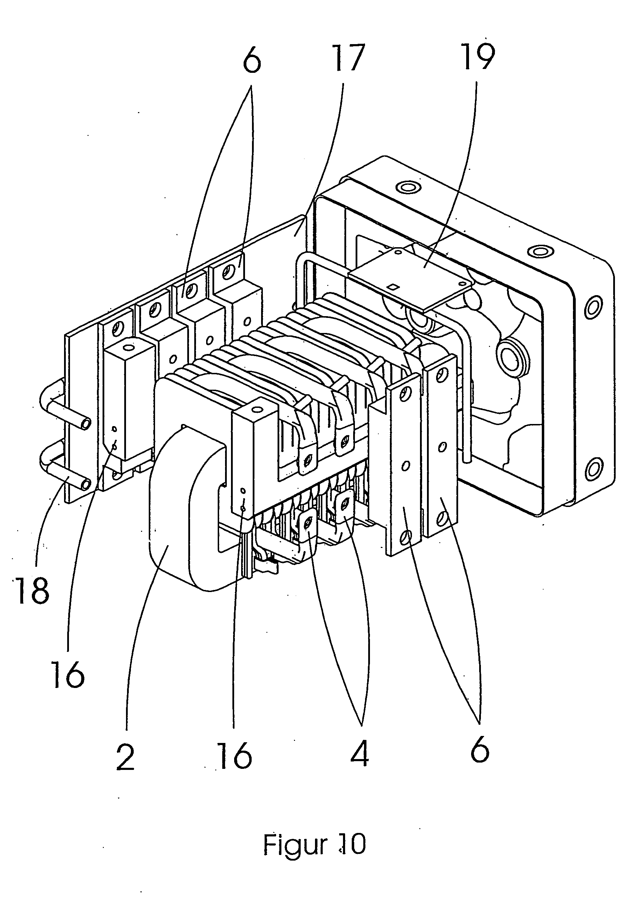

Die im letzten Absatz erwähnte verschachtelte Anordnung von Sekundärwicklungen ist in Figur 10 gezeigt. Man erkennt vorne und hinten Dioden 6, wobei einige der vorderen zur Verdeutlichung weggelassen worden sind. Die Seite der Dioden 6, die nicht mit einer Sekundärwindung 4 verbunden ist, ist mit einer Platte 17 elektrisch und mechanisch verbunden, die Kühlleitungen 18 aufweist. Die entsprechende Platte ist an der Vorderseite in Figur 10 weggelassen. In Figur 10 ist noch ein Strommesselement 19 dargestellt. Die abgewinkelten Anschlüsse 16 der Stangen 15 sind mit einer Platte 20 mit dem Ausgangsanschluss 5 verbunden, wie dies in Figur 2 gezeigt ist. Die leitenden Platten 17 sind mit einer Platte 21 mit dem anderen Anschluss 7 für den Schweißstrom verbunden, wie dies ebenfalls in Figur 2 ersichtlich ist.

Die gesamte Anordnung, die in Figur 2 gezeigt ist, ist noch mit Verbindungen bzw. Leitungen für das Kühlmittel versehen. Diese Leitungen sind in den Figuren nicht dargestellt. Schließlich wird dann zweckmäßiger Weise die ganze Einheit vergossen und in einem Gehäuse verschlossen.

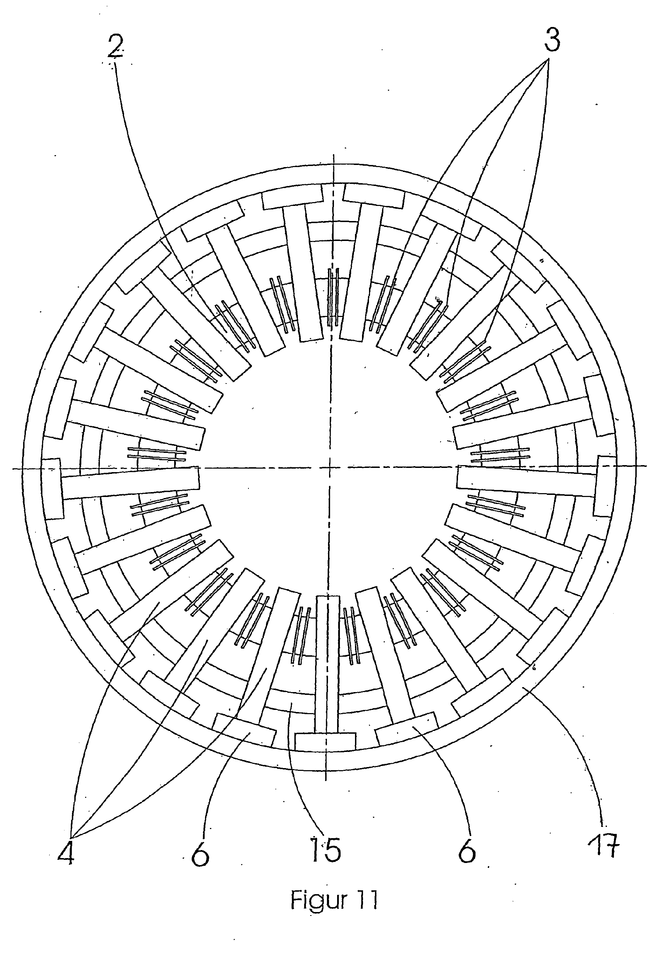

Fig. 11 zeigt eine zweite Ausführungsform, bei der der Kern 2 ringförmig ist. Auf ihn sind Primärwicklungen 3 und Sekundärwicklungen 4 aufgesetzt, die mit ihrem Mittelabgriff mit einem ringförmigen elektrisch leitenden Baukörper 15 verbunden sind. Die Dioden 6 an der den Mittelabgriffen gegenüberliegenden Enden der Sekundärwicklungen 4 sind mit einem ringförmigen elektrisch leitenden Bauelement 17 verbunden. Die (nicht gezeigten) Anschlüsse für Baukörper 15 und Bauelement 17 sind auf gegenüberliegenden Seiten vorgesehen, so dass die Stromwege für alle Sekundärwicklungen mit Dioden ungefähr gleich sind.

Bei einer nicht gezeigten Ausführungsform ist der ringförmige Baukörper 15 koaxial mit dem Kern, aber in Axialrichtung verschoben, also über oder unter dem Kern 2 angeordnet. Das ebenfalls ringförmige und mit dem Kern 2 koaxiale Bauelement 17 befindet sich auf der selben Seite des Kerns 2; die Sekundärwicklungen 4 sind gegenüber der Darstellung der Fig. 11 um den Kern 2 um 90 Grad gedreht. Es ist auch möglich, die Dioden und Mittelabgriffe abwechselnd oberhalb und unterhalb des Kerns 2 anzuordnen. Man erhält so eine Ausführungsform, die derjenigen der Figuren 2, 3, 9 und 10 entspricht, wobei allerdings der gerade Kernabschnitt zu einem geschlossenen Ring gekrümmt ist.

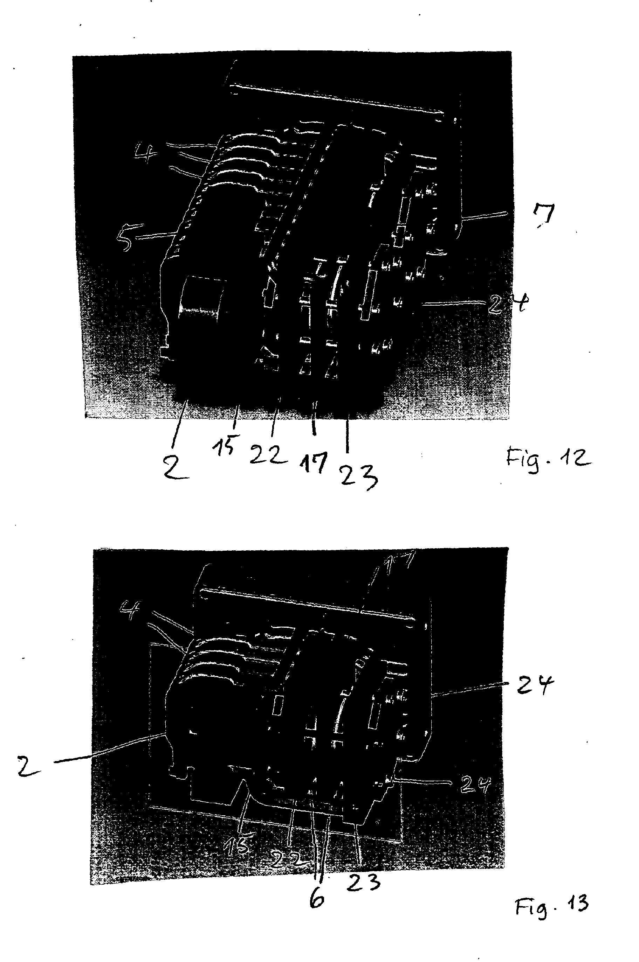

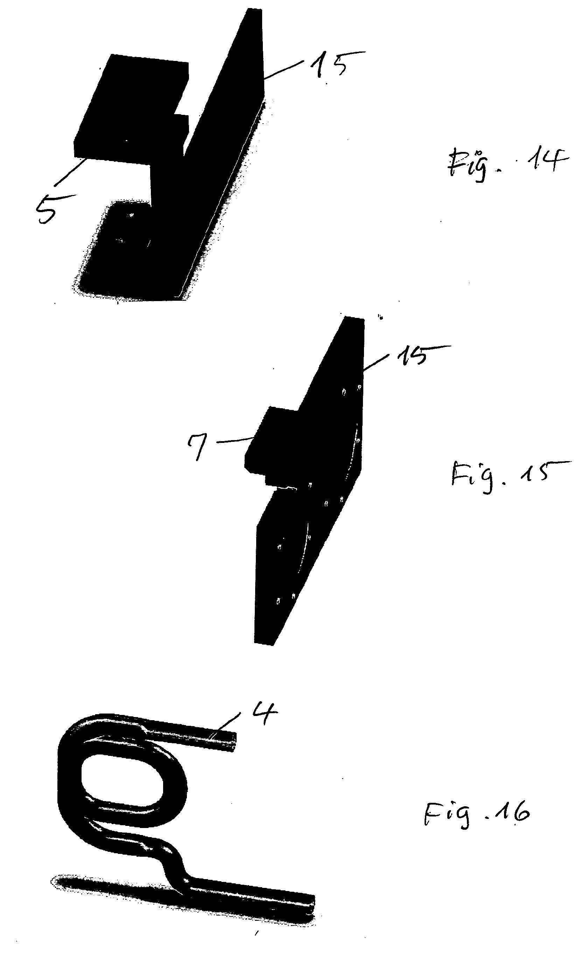

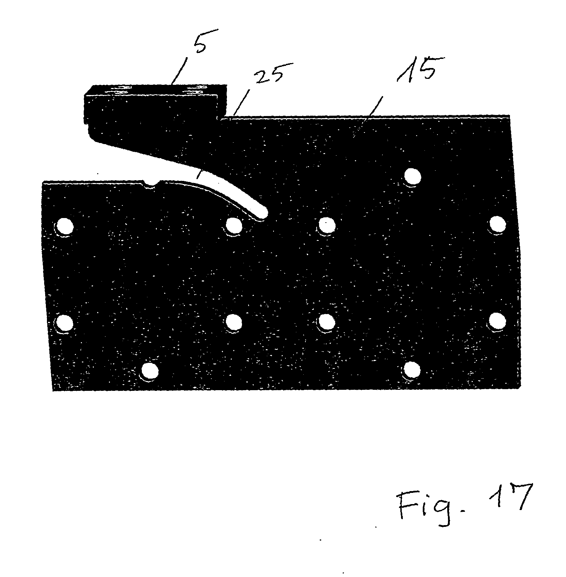

In den Figuren 12 bis 17 ist eine weitere Ausführungsform dargestellt. Wie dies in den Figuren 12 und 13 gezeigt ist, hat der Kern 2 im Wesentlichen die gleiche Form wie bei der ersten Ausführungsform. Auch die Sekundärwicklungen 4, von denen eine in Figur 16 näher dargestellt ist, haben ähnliche Formen wie bei der ersten Ausführungsform, wobei allerdings eines der Enden eine größere Länge hat als das andere. Diese Sekundärwicklungen 4 sind dabei im Gegensatz zur ersten Ausführungsform alle gleich ausgerichtet. Die kürzeren Enden sind mit Plattenelementen 22, die längeren mit Plattenelementen 23 elektrisch leitend verbunden. Die Plattenelemente 22 und 23 sind dabei parallel angeordnet. Zwischen ihnen sind jeweils gegenüberstehend Dioden 6 auf beiden Seiten eines plattenförmigen Bauelements 17 angeordnet. Die Diodenpakete 22, 6, 17, 23 werden dabei durch Schrauben 24 zusammengehalten und zusammengepreßt. Bei dieser Ausführungsform können besonders großflächige Dioden verwendet werden. Die Mittelabgriffe der Sekundärwicklungen 4 sind wieder mit einem länglichen Baukörper 15 elektrisch verbunden, der in Figur 14 gezeigt ist.

Wie dies in Figur 12 gezeigt ist, ist der Baukörper 15 mit einem Ausgangsanschluss 5 versehen, während das plattenförmige Bauelement 17 mit dem anderen Anschluss 7 für den Schweißstrom versehen ist. Die Anschlüsse 5 und 7 liegen dabei wieder wie bei der ersten Ausführungsform nebeneinander, wie dies die Norm für Schweißstromwandler erfordert. Damit nun die Stromwege für alle Dioden im Wesentlichen gleich sind, weist, wie dies in Figur 17 gezeigt ist, der Baukörper 15 einen Schlitz 25 auf, so dass die in Figur 12 vorderen Dioden im Baukörper 15 einen längeren Stromweg zum Anschluss 5 haben als die weiter hinter angeordneten Dioden 6, wodurch wieder ungefähr gleiche Stromwege erreicht werden wie bei der ersten Ausführungsform. Die etwas längeren unteren Schenkel der Sekundärwicklungen 4 bereiten keine größeren Probleme. Ggf. können diese Schenkel verdickt ausgebildet werden, so dass die Gesamtstromwiderstände an beiden Enden der Sekundärwicklungen 4 gleich sind. Bei der Ausführungsform der Figuren 12 bis 17 könnte das Diodenpaket auch um 90 Grad zur dargestellten Lage gedreht angeordnet sein. Statt der dort gezeigten vier Scheiben-Dioden 6 könnten auch zwei, sechs, acht usw. Scheiben-Dioden eingesetzt werden. Auch kann eine andere Anzahl, wie auch bei der ersten Ausführungsform, der Sekundärwicklungen und Primärwicklungen gewählt werden, wobei allerdings vorteilhafterweise Primär- und Sekundärwicklungen immer abwechselnd angeordnet sein sollten. Es können auch bei den unterschiedlichen Ausführungsformen die gleichen Primärspulen und auch die Primärspulen-Aufreihung (Reihenschaltung) verwendet werden.

Wie erwähnt, sind die beiden Endbereiche der Sekundärspulen 4 ungleich lang. Die örtliche Ungleichheit der Stromwege kann dabei durch die Funktionsreserve des Eisenkerns (Abstand zum Sättigungszustand) aufgefangen werden.

Im Fall eines gegenüber der Ausführungsform von Figur 12 bis 17 um 90 Grad gedreht eingebauten Diodenpaketes kann ebenfalls die Stromwegegleichheit der Sekundärspulen hergestellt werden. Es ergeben sich dabei aber Nachteile für die Anbringung der sekundären Außenanschlüsse (Polplatten).

Die Sekundärspule kann im Bereich der Mitteanzapfung - anstatt tangential leitend mit dem Minusleiter verbunden zu sein (angelötet) - auch lotrecht in den Minusleiter einmünden. In diesem Fall besteht die Sekundärspule aus zwei Hälften, die erst in Verbindung mit dem Minusleiter (Baukörper 15) elektrisch zur Sekundärspule werden. Bohrungen im Minusleiter (Baukörper 15) verbinden dann die Rohrinnenräume aller Einzel-Sekundärspulen und ermöglichen den Kühlmitteldurchfluss. Die Kühlleitungen, die selbstverständlich bei der Ausführungsform der Figuren 12 bis 17 ebenfalls vorgesehen sind, sind zwar in den Zeichnungen gezeigt, wurden aber nicht besonders erwähnt, da es sich dabei um eine ähnliche Ausführungsform wie bei der ersten Ausführungsform handelt.

## Patentansprüche

1. Schweißstromwandler, der einen Kern (2) mit einen geraden Abschnitt, auf dem Primär- und Sekundärwicklungen angebracht sind, und Dioden aufweist, die mit den Endbereichen der Sekundärwicklungen elektrisch verbunden sind, **dadurch gekennzeichnet,**
- **dass** die Endbereiche (14) und Mittelabgriffe benachbarter Sekundärwicklungen (4) unterschiedlich ausgerichtet sind,
- **dass** die Mittelabgriffe der Sekundärwicklungen (4) an sich parallel zum geraden Abschnitt des Kerns (2) erstreckenden als Stangen ausgebildeten länglichen Baukörpern (15) angebracht sind und mit denselben leitend verbunden sind,
- die von den Sekundärwicklungen (4) weggerichteten Endflächen der Dioden (6) an als elektrisch leitende Platten (17) ausgebildeten Bauelementen angebracht sind, die sich parallel zum geraden Abschnitt des Kerns (2) erstrecken und mit Leitungen (18) für das Kühlmittel versehen sind,
- wobei die Platten (17) an einem in Längsrichtung des geraden Abschnitts des Kerns (2) angeordneten Ende mit einem elektrischen Anschluss (7) verbunden sind, und
- die Stangen (15) an dem anderen in Längsrichtung des geraden Abschnitts des Kerns (2) angeordneten Ende mit einem elektrischen Anschluss (5) verbunden sind.

2. Schweißstromwandler, der einen Kern (2) mit einen geraden Abschnitt, auf dem die Primär- und Sekundärwicklungen angebracht sind, und Dioden aufweist, **dadurch gekennzeichnet,**
- **dass** die Endbereiche (14) und Mittelabgriffe benachbarter Sekundärwicklungen (4) gleich ausgerichtet sind,
- **dass** die einen Endbereiche der parallel angeordneten Sekundärwicklungen (4) mit ersten elektrisch leitenden Plattenelementen (22) und und die anderen Endbereiche der Sekundärwicklungen (4) mit zweiten elektrisch leitenden Plattenelementen (23) verbunden sind, die zu den ersten leitenden Plattenelementen parallel angeordnet sind,
- **dass** die Mittelabgriffe der Sekundärwicklungen (4) an einem sich parallel zum geraden Abschnitt des Kerns (2) erstreckenden als Stange ausgebildeten länglichen Baukörper (15) angebracht sind und mit denselben leitend verbunden sind,
- die von den ersten und zweiten leitenden Plattenelementen abgewandten Endflächen der Dioden (6) an einem als elektrisch leitende Platte (17) ausgebildeten Bauelement auf beiden Seiten desselben sich paarweise gegenüberstehend angebracht sind, das parallel zu den ersten und zweiten Plattenelementen zwischen denselben angeordnet ist und mit Leitungen (18) für das Kühlmittel versehen ist,
- wobei die Platte (17) an einem in Längsrichtung des geraden Abschnitts des Kerns (2) angeordneten Ende mit einem elektrischen Anschluss (7) verbunden ist und einen Schlitz aufweist, durch den direkter Stromfluss von den Dioden an diesem End zum Anschluss verhindert wird,und
- die Stangen (15) an dem selben in Längsrichtung des geraden Abschnitts des Kerns (2) angeordneten Ende mit einem elektrischen Anschluss (5) verbunden sind.

3. Schweißstromwandler nach einem der Ansprüche 1 oder 2, **dadurch gekennzeichnet, dass** der Kern (2) geschlossen ist.

4. Schweißstromwandler nach Anspruch 1, **dadurch gekennzeichnet, dass** zwei Platten (17) und zwei Stangen (15) vorgesehen sind.

5. Schweißstromwandler nach Anspruch 4, **dadurch gekennzeichnet, dass** sowohl die beiden Platten (17) als auch die beiden Stangen (15) um 60° bis 180° um den geraden Abschnitt des Kerns (2) herum zueinander winkelversetzt angeordnet sind.

6. Schweißstromwandler nach Anspruch 5, **dadurch gekennzeichnet, dass** sowohl die beiden Platten (17) als auch die beiden Stangen (15) zueinander um 180° winkelversetzt sind, also auf gegenüberliegenden Seiten des Abschnitts des Kerns (2) angeordnet sind.

7. Schweißstromwandler, der einen Kern (2), darauf angeordnete Primär- und Sekundärwicklungen (3, 4) und Dioden (6) aufweist, **dadurch gekennzeichnet, dass** der Kern (2) ein Ringkern ist, die Mittelabgriffe der Sekundärwicklungen (4) mit einem vorzugsweise koaxial mit dem Kern (2) angeordneten ringförmigen Baukörper (15) und die von den Sekundärwicklungen weggerichteten Enden der Dioden (6) mit einem ringförmigen vorzugsweise koaxial mit dem Kern (2) angeordneten Bauelement (17) verbunden sind.

8. Schweißstromwandler nach Anspruch 7, **dadurch gekennzeichnet, dass** die Mittelabgriffe der Sekundärwicklungen (4) mit einem auf einer Seite des Kerns (2) angeordneten ringförmigen Baukörper (15) und die von den Sekundärwicklungen weggerichteten Enden der Dioden (6) mit einem ringförmigen Bauelement (17) auf der selben Seite des Kerns (2) verbunden sind.

9. Schweißstromwandler nach Anspruch 8, **dadurch gekennzeichnet, dass** die Dioden (6) abwechselnd auf der einen und der anderen Seite des Ringkerns (2) angeordnet sind und zwei ringförmige Bauelemente (17) und zwei ringförmige Baukörper (15) vorgesehen sind.

10. Schweißstromwandler nach einem der Ansprüche 1 bis 9, **dadurch gekennzeichnet, dass** die Sekundärwicklungen (4) sich jeweils ungefähr 1,5 mal um den Kern (1) herum erstrecken.

11. Schweißstromwandler nach einem der Ansprüche 1 bis 10, **dadurch gekennzeichnet, dass** die Sekundärwicklungen (4) als metallische Röhren ausgebildet sind, durch die ein Kühlmittel leitbar ist und deren Querschnittsdurchmesser wenigstens teilweise, bevorzugt im Bereich der Überkreuzung, senkrecht zur Wicklungsebene kleiner ist als in der Wicklungsebene.

12. Schweißstromwandler nach einem der Ansprüche 1 bis 11, **dadurch gekennzeichnet, dass** die Primär- und Sekundarwicklungen (3, 4) abwechselnd auf dem Kern (2) angeordnet sind.

13. Schweißstromwandler nach einem der Ansprüche 1 bis 12, **dadurch gekennzeichnet, dass** die Baukörper (15) und Bauelemente/Platte(n) (17) mit Kühlmittelleitungen versehen sind.

14. Schweißstromwandler nach einem der Ansprüche 1 bis 13, **dadurch gekennzeichnet, dass** die Sekundärwicklungen (4) zumindest im Bereich der Überkreuzung flachgedrückte kreiszylindrische Röhren sind.

15. Schweißstromwandler nach einem der Ansprüche 1 bis 14, **dadurch gekennzeichnet, dass** die Primärwicklungen (3) eine Mehrzahl rechteckiger Blechabschnitte aufweisen, die jeweils um 90° abgewinkelt schraubenartig angeordnet sind.

16. Schweißstromwandler nach einem der Ansprüche 1 bis 14, **dadurch gekennzeichnet, dass** die Primärwicklungen (3) schraubenförmige Blechstreifen sind.

17. Schweißstromwandler nach einem der Ansprüche 1 bis 13, **dadurch gekennzeichnet, dass** die Primärwicklungen (3) als flache im wesentlichen an den Querschnitt des Kerns (2) angepasste mehrlagige Einheiten ausgebildet sind, wobei in der ersten Lage die Windungen von außen nach innen gewunden sind, anschließend ein Übergang in eine andere Lagsie war ein wie über sie kommen wie der vier, sondern Bildere stattfindet und dort die Windungen dann von innen nach außen verlaufen.

18. Primärwicklung für einen Transformator, **dadurch gekennzeichnet, dass** die Primärwicklung (3) als flache im wesentlichen an den Querschnitt des Kerns (2) angepasste mehrlagige Einheiten ausgebildet ist, wobei in der ersten Lage die Windungen von außen nach innen gewunden sind, anschließend ein Übergang in eine andere Lage stattfindet und dort die Windungen dann von innen nach außen verlaufen.

19. Primärwicklung für einen Transformator, **dadurch gekennzeichnet, dass** die Primärwicklungen (3) eine Mehrzahl rechteckiger Blechabschnitte aufweisen, die jeweils um 90° abgewinkelt schraubenartig angeordnet sind.

20. Schweißstromwandler nach einem der Ansprüche 1 bis 17, **dadurch gekennzeichnet, dass** die Primärwicklungen (3) aus Draht mit rechteckigen Querschnitt bestehen.

21. Schweißstromwandler nach einem der Ansprüche 1 bis 17 und 19, **dadurch gekennzeichnet, dass** die Primärwicklungen (3) in Reihe geschaltet sind.

22. Schweißstromwandler nach einem der Ansprüche 1 bis 17 und 19 oder 20, **dadurch gekennzeichnet, dass** die Anschlüsse (10, 11) der Primärwicklungen (3) senkrecht zur Ebene der Windungen gesehen übereinander angeordnet sind.

23. Schweißstromwandler nach einem der Ansprüche 1 bis 17 und 19 bis 21, **dadurch gekennzeichnet, dass** er mit elektrischen und Kühlmittelleitungs-Anschlüssen (8) zum Anbringen einer Invertereinheit (1) versehen ist und dass die alle Komponenten einschließlich der Invertereinheit (1) in einem gemeinsamen Gehäuse untergebracht sind.
